# EUROPEAN PATENT APPLICATION

(11) **EP 2 944 810 A1**
(43) Date of publication of application: **18.11.2015**
(21) Application number: 14168440.7
(22) Date of filing: 15.05.2014
(51) Int. Cl.: F03D 11/04, E04H 12/10

(54) **A wind turbine tower part and use of a wind turbine tower part**

(71) Applicant: Rambøll Danmark A/S, 2300 Copenhagen S (DK)
(72) Inventor: Stottrup-Andersen, Ulrik, 2840 Holte (DK); Nielsen, Mogens Gunhard, 2900 Hellerup (DK); Jespersen, Martin Albøg, 4000 Roskilde (DK)
(74) Representative: Patentgruppen

(57) **Abstract**

Disclosed is a wind turbine tower part (1) for supporting at least a wind turbine nacelle and rotor at a distance above the ground. The tower part comprises three or more corner posts (4) each including a number of mounting means (5) and a plurality of transverse braces (6) extending between neighbouring corner posts (4), wherein end parts (7) of the braces (6) are provided with brace connection means (8). The brace connection means (8) are connected to the mounting means (5) by means of a friction connection comprising fishplate means (9) extending on opposite sides of the mounting means (5) and the brace connection means (8).

## Description

### Background of the invention

The invention relates to a wind turbine tower part for supporting at least a wind turbine nacelle and rotor at a distance above the ground. The invention further relates to use of a wind turbine tower part.

### Description of the Related Art

Commercial wind turbines are becoming bigger and bigger and particularly regarding the tower this is a problem. Today most wind turbines are provided with tubular towers where the diameter increases downwards to provide sufficient support. But if the diameter becomes too large it is no longer possible to transport the tower sections by means of normal on-shore transportation means. This problem could be solved by dividing the tower into segments but this solution will drastically increase the cost of the tower. Thus, it is known to form at least a part of the tower of an on-shore wind turbine as a so-called jacket structure. A jacket structure typically comprises three or four substantially vertical corner posts which are interconnected by a mesh of braces to form a lattice tower part. The jacket structure will then form the entire tower or the tower could be formed by different tower types - typically a lower jacket tower part and an upper tubular tower part.

This tower configuration is also well-known with off-shore wind turbines where a lower jacket tower part typically extends from the seabed and up above sea level as a sort of off-shore foundation onto which a wind turbine comprising a upper tubular tower part is placed.

Advantages of forming at least a part of the tower as a jacket structure are that a jacket tower part typically is more inexpensive than a corresponding tubular tower part, the open structure of the lattice makes the tower less sensitive to impact of wind and water and a jacket tower part is typically easier to transport and install onsite. Thus, from EP 2 511 423 A1 it is known to form the tower of an off-shore wind turbine from a lower jacket tower part and an upper tubular tower part. In the lower jacket tower part the braces are connected to the corner posts by making an end part of a brace extend into a clevis on a corner post and interconnected these by means of a through bolt or a cast tubular extension protruding from a corner post can be connected to a brace by means of bolts through abutting flanges arranged at the ends of the tubular extension and the brace. But these connection methods require a high degree of precision which is difficult or expensive to achieve for such large structures.

An object of the invention is therefore to provide for an advantageous connection technique between corner posts and braces of a wind turbine tower part.

### The invention

The invention provides for a wind turbine tower part for supporting at least a wind turbine nacelle and rotor at a distance above the ground. The tower part comprises three or more corner posts each including a number of mounting means and a plurality of transverse braces extending between neighbouring corner posts, wherein end parts of the braces are provided with brace connection means. The brace connection means are connected to the mounting means by means of a friction connection comprising fishplate means extending on opposite sides of the mounting means and the brace connection means.

Making fishplate means extend on both sides of the mounting means and the brace connection means is advantageous in that it enables a more uniform stress distribution through the joint and in that it enables that large surface areas of the fishplate means can interact with large surface areas of the mounting means and the brace connection means to create a strong friction joint. Furthermore, a friction connection will typically also comprise tension means - such as bolts - forcing the two fishplate means towards each other. This is advantageous in that the connection between the corner posts and the braces thus can be formed without or substantially without welding which would weaken the structure and require greater material thickness and more costly inspection. Avoiding welding also ensures that the wind turbine tower part more easily can be assembled onsite.

Connecting the brace connection means and the mounting means by means of a friction connection is also advantageous in that it enables a fixed play-free joint during normal use, which at the same time is very tolerant to alignment- or distance inaccuracies during assembly.

It should be noticed that by the term "friction connection" - e.g. known from structural engineering - in this context is to be understood any type of bolted structural connection which relies on friction between the two connected elements rather than bolt shear and bolt bearing to join two structural elements. Friction connections are also known as slip-critical joints. In a friction connection, loads are transferred from one element to another - i.e. between the fishplate means and the mounting means and between the fishplate means and the brace connection means - through friction forces developed between the faying surfaces of the fishplate means and the mounting means and the brace connection means. These friction forces are typically generated by the extreme tightness of the structural bolt means holding the connection together. These bolts means are tensioned to a minimum required amount to generate large enough friction forces between the faying surfaces such that the shear (or tension) load is transferred by the structural members and not by the bolts (in shear).

A further advantage of using friction connections is therefore that if they fail (by slipping), they revert to bolt-shear-type connections, with structural forces now transferred through bolt shear. Thus a slippage failure of a friction connection is not a catastrophic failure.

It should also be noticed that in this context the term "mounting means" should be understood as any kind of gusset, fitting, node, bore, connection surface, bracket or other kind of mountings suitable for enabling that transverse braces can be securely connected to the corner posts.

Likewise, in this context the term "brace connection means" should be understood as any kind of gusset, fitting, node, bore, connection surface, bracket or other kind of brace connectors suitable for enabling that transverse braces can be securely connected to the corner posts.

Also, in this in this context the term "fishplate means" should be understood as any kind of plate, rod, pipe, fitting, bracket or other kind of fishplate device suitable for forming a strong fishplate connection between the mounting means and the brace connection means.

In an aspect of the invention, said mounting means and said brace connection means are arranged substantially end to end.

Arranging the mounting means and the brace connection means end to end - instead of e.g. overlapping - is advantageous in that it enables that fishplates can be arranged on both sides of the joint - thus doubling the area (compared to overlapping) of abutting surfaces of the fishplate joint - thus increasing the strength of the joint.

In an aspect of the invention, said fishplate means are connected to said mounting means by means of a plurality of bolts and in an aspect of the invention, said fishplate means are connected to said brace connection means by means of a plurality of bolts.

Interconnecting the fishplate means at the mounting means and at the brace connection means by means of a plurality of bolts is advantageous in that the bolt connection is easy to assemble and easy to pre-tension to a level required to form a strong friction connection. And using a plurality (of bolts) is advantageous it that this enables that the load can be distributed more evenly over a large area to form a strong hold - even with relatively thin fishplate means.

It should be noted that in this context the term "bolt" should be understood as any kind of stud bolts, strut bolts, tension control bolts, compressible washer tension indicating type bolts or any other kind of fastening means - with or without tension indicating means - suitable for creating a pre-tensioned state between the fishplates so that the fishplates are forced heavily against the mounting means and the brace connection means to create a strong friction connection.

In an aspect of the invention, said bolts are arranged to extend through said fishplate means on both sides of said mounting means and/or said brace connection means.

Connecting the fishplates to the mounting means and the brace connection means by means of bolts extending through both fishplate means is advantageous in that it reduces number of bolts - in comparison to a configuration where each fish plate was bolted directly to the mounting means and the brace connection means - and it ensures a more even and uniform load distribution in and through the joint.

In an aspect of the invention, said bolts are further arranged to extend through said mounting means and/or said brace connection means.

In principle the friction connection could be formed by forcing the fish plates against the mounting means and the brace connection means by means of bolts arranges between the mounting means and the brace connection means and/or around the periphery of the mounting means and the brace connection means. But making the bolts extend through the mounting means and the brace connection means is advantageous in that the tension load provided by the bolts can be distributed more evenly across the mounting means and the brace connection means, thus creating a stronger friction connection and making the bolt extend through the mounting means and the brace connection means will also ensure that if the friction connection should slip, bolt shear will still be able hold the joint together.

In an aspect of the invention, said bolts have been pre-tensioned to a specific tension level ensuring that shear load through said friction connection is transferred by friction between said fishplate means and said mounting means and between said fishplate means and said brace connection means.

If the shear load through a joint has to be transferred as shear load on bolts, rivets, pins, plugs or similar the parts of the joint and the surrounding structure will have to be manufactured with much higher precision to ensure that the joint can be assembled fast and correctly. Precision will also have to be increased to ensure that a shift in the load direction through the joint will not create play or backlash which in time will decrease the stability of the tower part or even lead to catastrophic failure. Thus, it is advantageous to use friction connection in that a friction connection can accept much manufacturing inaccuracy while still having absolutely no play during use.

In an aspect of the invention, said fishplate means are overlapping opposite sides of said mounting means and said brace connection means.

Making the fishplate means overlap the mounting means and the brace connection means on both sides is advantageous in that it provides for a stronger joint with a more even load distribution.

In an aspect of the invention, said fishplate means on opposite sides of said mounting means and said brace connection means are substantially identical.

Forming the fishplate means on both sides of the mounting means and the brace connection means substantially identical is advantageous in that it simplifies manufacturing, assembly and the general logistics.

In an aspect of the invention, said mounting means and/or said brace connection means are formed with a first connection plate and a second connection plate, wherein said connection plates are parallel with said fishplate means and wherein said connection plates are spaced apart.

Spacing the connection plates of the mounting means or the brace connection means apart is advantageous in that it enables use of further fishplate means between the connection plates, thus ensuring a stronger joint.

In an aspect of the invention, spacing means are provided between said first connection plate and said second connection plate.

Arranging spacing means between the connection plates is advantageous in that this will ensure that the pre-tensioning of the fishplate means does not deform the connection plates.

In an aspect of the invention, said transverse braces are formed as pipes.

Forming the braces as pipes is advantageous in that pipes have an advantageous compression capacity compared to weight.

In an aspect of the invention, end parts of said pipes comprise a flat or at least partly flattened connection portion.

Forming the pipes with flat or at least partly flattened connection portions is advantageous in that the flat connection portions enables a more simple design of the fishplate means.

In an aspect of the invention, said pipes comprise a circular cross section.

Pipes with a circular cross section have a very advantageous compression capacity compared to weight.

The invention further provides for use of a wind turbine tower part according to any of the previously discussed wind turbine tower parts for supporting at least parts of a wind turbine.

### Figures

The invention will be described in the following with reference to the figures in which
- fig. 1: illustrates a large modem wind turbine comprising a tubular tower part and a jacket tower part, as seen in perspective,
- fig. 2: illustrates a section of a jacket wind turbine part, as seen from the front,
- fig. 3: illustrates a close-up of two braces connected to a corner post, as seen from the front,
- fig. 4: illustrates a cross section through fishplate means 9 of a friction joint, as seen in direction of the brace,
- fig. 5: illustrates a friction connection between mounting means and brace connection means, as seen from the top,
- fig. 6: illustrates a cross section through the middle of the friction connection disclosed in fig. 5, as seen from the top,
- fig. 7: illustrates a friction connection comprising four fishplate means, as seen from the top,
- fig. 8: illustrates the friction connection disclosed in fig. 7, as seen in perspective.

### Detailed description of the invention

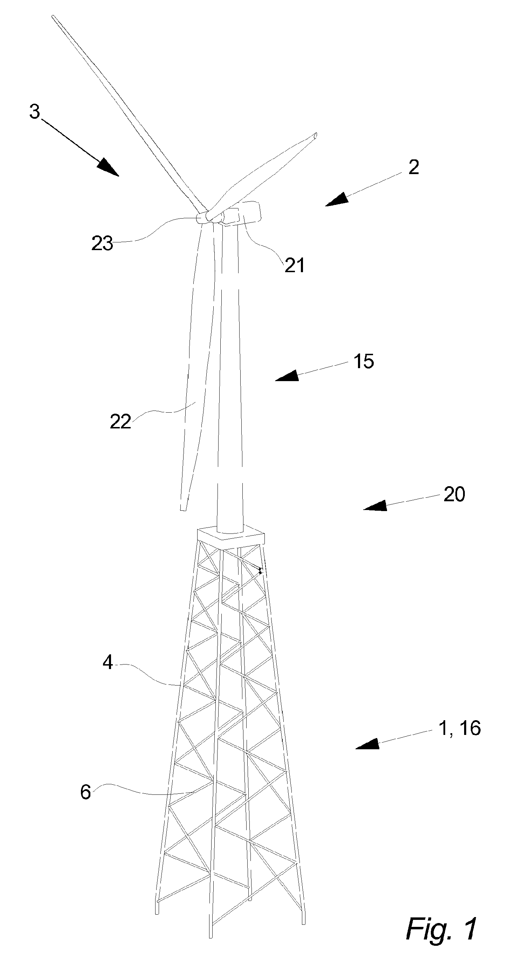

Fig. 1 illustrates a wind turbine 2, comprising a tower 20 and a wind turbine nacelle 21 positioned on top of the tower 20. The wind turbine rotor 3, comprising three wind turbine blades 22 mounted on a hub 23, is connected to the nacelle 21 through a shaft which extends out of the nacelle 21 front. In another embodiment the wind turbine rotor 3 could comprise another number of blades 22 such as one, two, four or more.

In this embodiment the tower 20 is formed by a tubular tower part 15 and a wind turbine tower part 1 formed as a jacket tower part 16. However, in another embodiment the entire tower 20 could be a wind turbine tower part 1 formed as a jacket tower part 16.

In this embodiment the jacket tower part 16, 1 is formed by four corner posts 4, wherein all neighboring corner posts 4 are interconnected by transverse braces 6. However, in another embodiment the tower part 16, 1 could comprise another number of corner posts 4 - such as three, five, six, eight or even more - other than neighboring corner posts 4 could be interconnected by braces 6 and/or in an embodiment some neighboring corner posts 4 would not be interconnected by braces 6.

In this embodiment the distance between all the corner posts 4 is uniform and it decreases linearly upwards but in another embodiment the corner posts 4 could be completely vertical making the mutual distance between corner posts 4 constant or the distance could vary or at least decrease non-linearly upwards.

In this embodiment the wind turbine 2 is located on-shore but in another embodiment the wind turbine 1 could be placed off-shore i.e. most or the entire jacket tower part 1, 16 could be submerged in water and the bottom end of the jacket tower part 1, 16 could be connected to the seabed or to a foundation placed on or in the seabed.

In this embodiment the braces are arranged in a V-pattern but in another embodiment the braces could be arranged in an X-, K-, N- or any other pattern which requires connections of the type outlined.

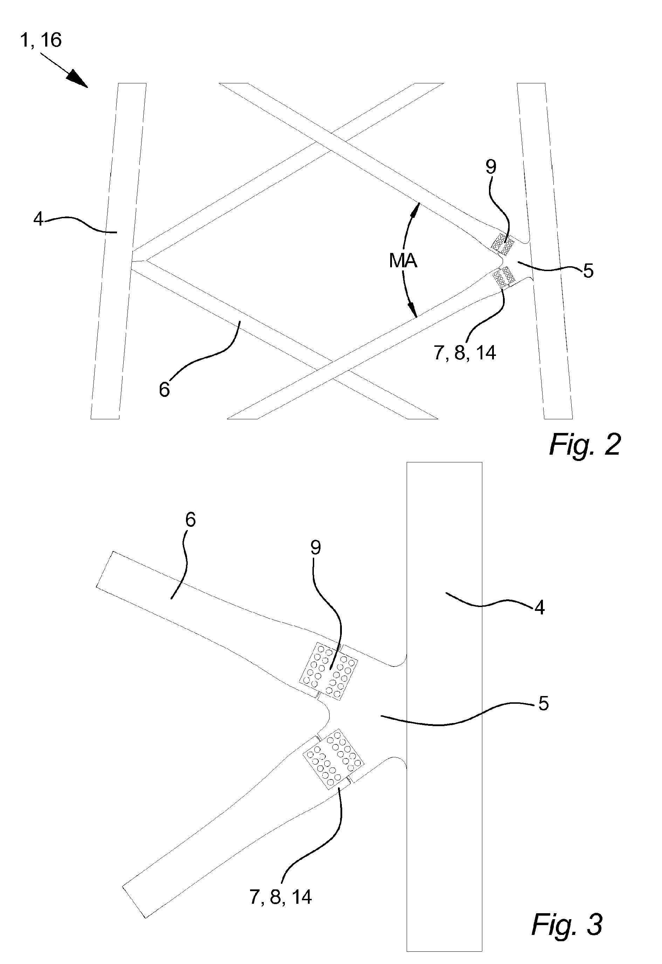

Fig. 2 illustrates a section of a jacket wind turbine part 1, 16, as seen from the front.

In this embodiment all the braces 6 are formed with a mutual angle MA around 60° but in another embodiment this mutual angle MA could be larger such as 70°, 80°, 90°, 100° or even more or it could be smaller such as 50°, 45°, 30° or even smaller or the mutual angle MA could vary along the extend of the jacket tower part 1, 16.

In this embodiment all the braces 6 are connected to the corner posts 4 by means of the same type of friction connection comprising fishplate means 9 but in another embodiment some of the joints could be formed differently.

In this embodiment all the corner posts 4 and all the braces 6 are made from pipes having a circular cross section but in another embodiment some or all of these pipes 4, 6 could predominantly have another cross section such as square, rectangular, polygonal, oval or other or some or all of the pipes 4, 6 could be replaced by beams, rods, bars, plates or some other type of device suited to form corner posts 4 and/or braces 6 for a jacket tower part 1, 16.

Fig. 3 illustrates a close-up of two braces 6 connected to a corner post 4, as seen from the front.

In this embodiment the corner posts 4 are formed with mounting means 5 in the form of a dedicated plate welded to the corner posts 4. But in another embodiment the mounting means 5 could be connected to the corner posts 4 by means of bolts, magnetic attraction forces, adhesives, they could be clamping the corner posts 4 or they could be connected to the corner posts 4 in another way. In this embodiment the mounting means 5 are separate means welded to the corner posts 4 but in another embodiment the mounting means 5 could be formed integrally or at least more integrally with the corner posts 4. Also in another embodiment the mounting means 5 could also or instead be formed by means of pipes, rods, lattice or other means suited for forming mounting means 5 for the corner posts 4 of a jacket tower part 1, 16.

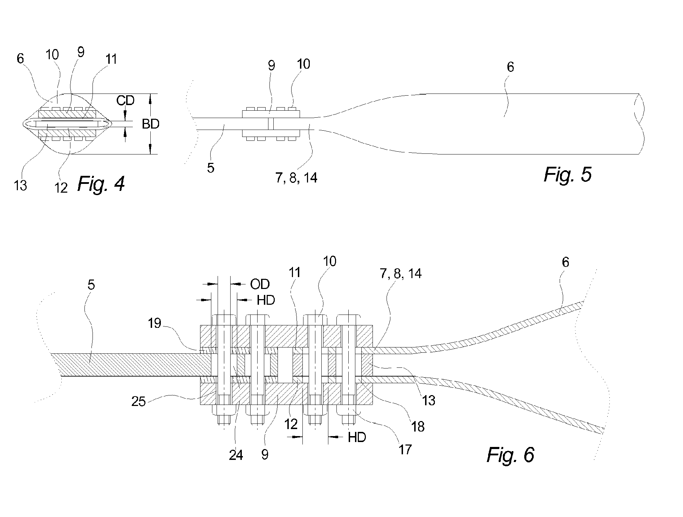

Fig. 4 illustrates a cross section through fishplate means 9 of a friction joint, as seen in direction of the brace 6 and fig. 5 illustrates a friction connection between mounting means 5 and brace connection means 8, as seen from the top.

In this embodiment each brace 6 is formed with brace connection means 8 at both ends 7 of the brace 6. In this embodiment the connection portion 14 of the brace 6 includes a flattened end portion 7 of the brace 6 but in another embodiment the connection portion 14 - i.e. the brace connection means 8 - could comprise a plate, a rod, a pipe or other connected to the brace 6 e.g. by means of welding, bolts, rivets or other means. In this embodiment the end part 7 of the brace 6 is not completely flattened so that the brace connection means 8 comprises a first connection plate 11 and a second connection plate 12 forming two parallel walls of the brace connection means 8 that are spaced apart with a connection plate distance CD, which in this case is approximately 1/10 of the brace outer diameter BD but in another embodiment the connection plate distance CD could between 1/100 - 5, preferably between 1/50-1.5 and most preferred between 1/20 - 1/2 of the brace outer diameter BD or in another embodiment the first connection plate 11 and a second connection plate 12 could be fully or partly abutting.

To ensure that the flattened end portion 7 of the brace 6 does not collapse when the fishplate means 9 are forced towards each other (by the bolts 10), the flattened end portion 7 are in this embodiment provided with spacing means 13 arranged between the first connection plate 11 and the second connection plate 12. In this embodiment the spacing means 13 are formed as a single plate but in another embodiment the spacing means 13 could also or instead comprise bushings, pipes, blocks, wedges or other. In this embodiment the spacing means 13 are formed separate from the brace connection means 8 but in another embodiment they could be formed integrally with these.

In this embodiment the mounting means 5 and the brace connection means 8 are arranged substantially end to end but in another embodiment the mounting means 5 and the brace connection means 8 could be at least partly overlapping.

Fig. 6 illustrates a cross section through the middle of the friction connection disclosed in fig. 5, as seen from the top.

In this embodiment the brace connection means 8 is connected to the mounting means 5 by means of a friction connection comprising fishplate means 9 extending on opposite sides of the mounting means 5 and the brace connection means 8 and held together by a plurality of bolts 10 extending through the brace connection means 8 and the mounting means 5 respectively and the fishplate means 9.

In this embodiment the mounting means 5 is connected to the fishplate means 9 by means of ten substantially evenly spaces and distributed bolts 10 and the brace connection means 8 is also connected to the fishplate means 9 by means of ten evenly spaces and distributed bolts 10 but in another on or both these friction connections could comprise another number of bolts 10 i.e. either more than ten bolts 10 or less than ten bolts 10 and/or the bolts 10 could be distributed differently.

In this embodiment all the bolts 10 are through bolts 10 extending all the way through the brace connection means 8 and the mounting means 5 respectively and the fishplate means 9 so that the bolts 10 are held in place by means of nuts 17 but in another embodiment one of the fishplate means 9 could be provided with threaded holes for engaging the bolts 10 or the brace connection means 8, the mounting means 5 and/or the spacing means 13 could be provided with threaded holes so that each fishplate means 9 would be attached by means of its own set of bolts 10.

In another embodiment the fishplate means 9 could instead or also be forced together by means of some sort of clamping arrangement, by other types of bolts or by other means suited for forcing the fishplate means 9 towards each other. Also in another embodiment some or all the bolts 10 could be arranged to not extend through the brace connection means 8, the mounting means 5 and/or the spacing means 13 if e.g. the bolts 10 was arranged to connect the fishplate means 9 between the brace connection means 8 and the mounting means 5 and/or around the periphery of the brace connection means 8 and the mounting means 5.

In this embodiment both fishplate means 9 are formed substantially identically but in another embodiment the one fishplate means 9 could be formed different from the other e.g. to compensate for asymmetry in the brace connection means 8, the mounting means 5 or other.

Since the friction connection does not transfer loads between the brace connection means 8 and the mounting means 5 through shear load on the bolts 10 it is possible to form the brace connection through holes 18 and the mounting through holes 24 with a relative large diameter HD in relation to the outer diameter OD of the bolts 10 i.e. in this embodiment the holes diameter HD is approximately twice as big as the outer diameter OD of the bolts 10 but in another embodiment the hole/bolt diameter ratio could be smaller such as 1.8, 1.5, 1.3 or even smaller or this ratio could be bigger such as 2.2, 2.5, 3 or even bigger.

To ensure that the tension from the bolts 10 are distributed more evenly over the "active" area of the fishplate means 10 the fishplate through holes 25 are in this embodiment formed with a relatively small diameter in relation to the outer diameter OD of the bolts 10. However, in another embodiment the fishplate through holes 25 could also be formed with a relatively large diameter in relation to the outer diameter OD of the bolts 10 and the tension could then e.g. be distributed more evenly by means of washers or other similar means.

In this embodiment the friction connection is established by bringing a brace 6 substantially in place in front of mounting means 5 to arrange the brace connection means 8 and the mounting means 5 substantially end to end i.e. in this embodiment spaced a little apart. In this embodiment the flattened connection portion 14 of the brace 6 is thicker than the mounting means 5, thus in this embodiment the mounting means 5 is provided with mounting means spacing plates 19 on either sides. Also the spacing means 13 is positioned in between the first connection plate 11 and the second connection plate 12 before the fishplate means are placed in either sides of the brace connection means 8 and the mounting means 5. Bolts 10 and accompanying nuts 17 are now mounted to hold the fishplate means 9 in place and the bolts 10 are pre-tensioned to a specific tension level ensuring that shear load through the friction connection is transferred by friction between the fishplate means 9 and the mounting means 5 and between the fishplate means 9 and the brace connection means 8. Thus, since the loads are transferred by this friction the large play around the bolts 10 in the through holes 18, 24 of the brace connection means 8 and the mounting means 5 will have no effect on the joints ability to efficiently transfer load in both - e.g. alternating - directions. But the large play around the bolts 10 in the through holes 18, 24 will make it much easier to assemble the joint and it will reduce cost in that production and assembling accuracy can be reduced without it affecting quality.

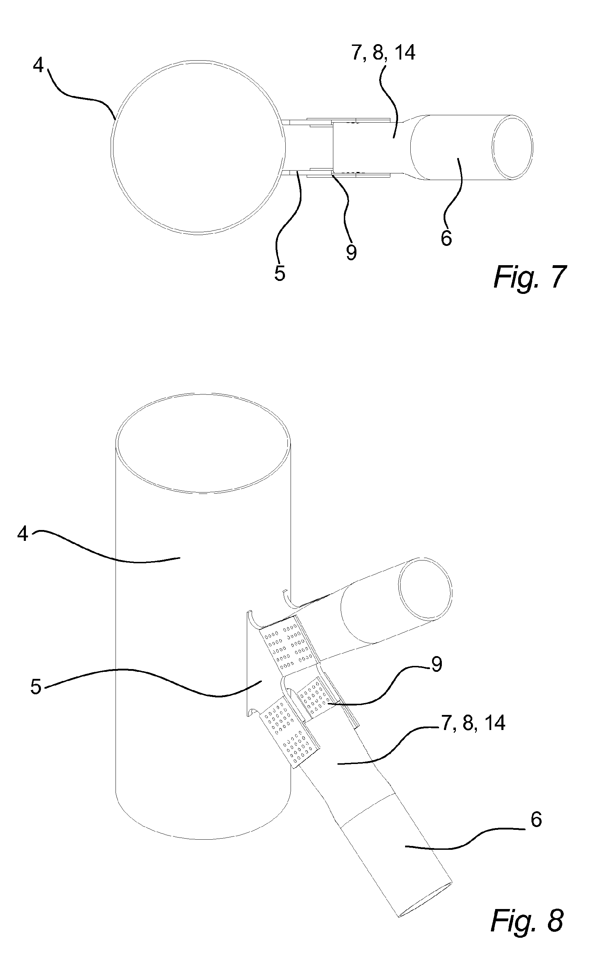

Fig. 7 illustrates a friction connection comprising four fishplate means 9, as seen from the top and fig. 8 illustrates the friction connection disclosed in fig. 7, as seen in perspective.

In this embodiment the first connection plate 11 and the second connection plate 12 of the brace connection means 8 are spaced further apart and the corner posts 4 are provided with two spaced apart mounting means 5 at each connection point for the braces 6. This arrangement enables that further fishplate means 9 can be arranged at each joint i.e. in this embodiment each end 7 of each brace 6 is connected to each corner post 4 through four fishplate means 9 thus doubling the areas of the shear transferring surfaces and thus in principle doubling the load transferring capacity of each joint.

The invention has been exemplified above with reference to specific examples of designs and embodiments of wind turbine tower parts 1, wind turbines 2, braces 6, fishplate means 9 etc. However, it should be understood that the invention is not limited to the particular examples described above but may be designed and altered in a multitude of varieties within the scope of the invention as specified in the claims.

### List

- 1.: Wind turbine tower part
- 2.: Wind turbine
- 3.: Rotor
- 4.: Corner post
- 5.: Mounting means
- 6.: Brace
- 7.: End part of brace
- 8.: Brace connection means
- 9.: Fishplate means
- 10.: Bolt
- 11.: First connection plate
- 12.: Second connection plate
- 13.: Spacing means
- 14.: Connection portion of brace
- 15.: Tubular tower part
- 16.: Jacket tower part
- 17.: Nut
- 18.: Brace connection through hole
- 19.: Mounting means spacing plate
- 20.: Wind turbine tower
- 21.: Nacelle
- 22.: Blade
- 23.: Hub
- 24.: Mounting means through hole
- 25.: Fishplate through hole
- MA.: Mutual angle between braces
- CD.: Distance between connection plates
- BD.: Brace diameter
- HD.: Through hole diameter
- OD.: Bolt diameter

## Claims

1. A wind turbine tower part (1) for supporting at least a wind turbine nacelle (21) and rotor (3) at a distance above the ground, said tower part (1) comprising
three or more corner posts (4) each including a number of mounting means (5),
a plurality of transverse braces (6) extending between neighbouring corner posts (4), wherein end parts (7) of said braces (6) are provided with brace connection means (8), and
wherein said brace connection means (8) are connected to said mounting means (5) by means of a friction connection comprising fishplate means (9) extending on opposite sides of said mounting means (5) and said brace connection means (8).

2. A wind turbine tower part (1) according to claim 1, wherein said mounting means (5) and said brace connection means (8) are arranged substantially end to end.

3. A wind turbine tower part (1) according to claim 1 or 2, wherein said fishplate means (9) are connected to said mounting means (5) by means of a plurality of bolts (10).

4. A wind turbine tower part (1) according to any of the preceding claims, wherein said fishplate means (9) are connected to said brace connection means (8) by means of a plurality of bolts (10).

5. A wind turbine tower part (1) according to claim 3 and 4, wherein said bolts (10) are arranged to extend through fishplate means (9) on both sides of said mounting means (5) and/or said brace connection means (8).

6. A wind turbine tower part (1) according to claim 5, wherein said bolts (10) are further arranged to extend through said mounting means (5) and/or said brace connection means (8).

7. A wind turbine tower part (1) according to any of claims 3 to 6, wherein said bolts (10) have been pre-tensioned to a specific tension level ensuring that shear load through said friction connection is transferred by friction between said fishplate means (9) and said mounting means (5) and between said fishplate means (9) and said brace connection means (8).

8. A wind turbine tower part (1) according to any of the preceding claims, wherein said fishplate means (9) are overlapping opposite sides of said mounting means (5) and said brace connection means (8).

9. A wind turbine tower part (1) according to any of the preceding claims, wherein said fishplate means (9) on opposite sides of said mounting means (5) and said brace connection means (8) are substantially identical.

10. A wind turbine tower part (1) according to any of the preceding claims, wherein said mounting means (5) and/or said brace connection means (8) are formed with a first connection plate (11) and a second connection plate (12), wherein said connection plates (11, 12) are parallel with said fishplate means (9) and wherein said connection plates (11, 12) are spaced apart.

11. A wind turbine tower part (1) according to claim 10, wherein spacing means (13) are provided between said first connection plate (11) and said second connection plate (12).

12. A wind turbine tower part (1) according to any of the preceding claims, wherein said transverse braces (6) are formed as pipes.

13. A wind turbine tower part (1) according claim 12, wherein end parts (7) of said pipes comprises a flat or at least partly flattened connection portion (14).

14. A wind turbine tower part (1) according claim 12 or 13, wherein said pipes comprise a circular cross section.

15. Use of a wind turbine tower part (1) according to any of the preceding claims for supporting at least parts of a wind turbine (2).
